(19) **Europäisches Patentamt**
**European Patent Office**
**Office européen des brevets**

(11) **EP 2 044 750 B1**

(12) **EUROPEAN PATENT SPECIFICATION**

(45) Date of publication and mention
of the grant of the patent:
**30.03.2016 Bulletin 2016/13**

(21) Application number: **07789709.8**

(22) Date of filing: **16.06.2007**

(51) Int Cl.:
***H04L 29/06*** *(2006.01)*

(86) International application number:
**PCT/IB2007/052312**

(87) International publication number:
**WO 2008/004147 (10.01.2008 Gazette 2008/02)**

(54) **METHOD AND COMMUNICATIONS NODE FOR CREATION AND TRANSMISSION OF USER SPECIFIC DICTIONARY FOR COMPRESSION AND DECOMPRESSION OF MESSAGES**

VERFAHREN UND KOMMUNIKATIONSKNOTEN ZUR ERZEUGUNG UND ÜBERTRAGUNG EINES BENUTZERSPEZIFISCHEN WÖRTERBUCHS ZUM KOMPRIMIEREN UND DEKOMPRIMIEREN VON NACHRICHTEN

PROCÉDÉ ET NOEUD DE COMMUNICATION POUR LA CRÉATION ET LA TRANSMISSION D'UN DICTIONNAIRE SPÉCIFIQUE À UN UTILISATEUR POUR LA COMPRESSION ET LA DÉCOMPRESSION DE MESSAGES

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **30.06.2006 US 477638**

(43) Date of publication of application:
**08.04.2009 Bulletin 2009/15**

(73) Proprietor: **Telefonaktiebolaget LM Ericsson (publ)**
**164 83 Stockholm (SE)**

(72) Inventor: **FOTI, George**
**Dollard Des Ormeaux, Québec H9G 2Z8 (CA)**

(74) Representative: **Burchardi, Thomas et al**
**Ericsson GmbH**
**Ericsson Allee 1**
**52134 Herzogenrath (DE)**

(56) References cited:
**WO-A-2004/088850      WO-A-2007/069944**
**US-A1- 2002 057 715**

• **PRICE SIEMENS/ROKE MANOR C BORMANN TZI/UNI BREMEN J CHRISTOFFERSSON H HANNU ERICSSON Z LIU NOKIA J ROSENBERG DYNAMICSOFT R: "Signaling Compression (SigComp); rfc3320.txt;" IETF STANDARD, INTERNET ENGINEERING TASK FORCE, IETF, CH, January 2003 (2003-01), XP015009190 ISSN: 0000-0003**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Technical Field**

The present invention relates to a method and system for creating dictionaries for use in compression and decompression of messages.

**Background**

The Session Initiation Protocol (SIP) is an Internet Engineering Task Force (IETF) standard protocol for initiating an interactive user session that may involve multimedia elements such as video, voice, chat, gaming, and virtual reality. Like the Hypertext Transfer Protocol (HTTP) or the Simple Mail Transfer Protocol (SMTP), SIP works in the Application layer of the Open Systems Interconnection (OSI) communications model and can establish multimedia sessions or Internet telephony calls, modify, and terminate them. SIP can also be used to invite participants to unicast or multicast sessions that do not necessarily involve the initiator. Because SIP supports name mapping and redirecting services, it makes it possible for users to initiate and receive communications and services from various locations, and for networks to identify the users wherever they are. SIP is a request-response protocol, dealing with requests from clients and responses from servers. Participants are identified by SIP Uniform Resource Locators (URLs). Requests can be sent through any transport protocol, such as for example the User Datagram Protocol (UDP), the Stream Control Transmission Protocol (SCTP), or the Transport Control protocol (TCP). SIP determines the end system to be used for the session, the communication media and media parameters, and the called party's desire to engage in the communication: Once these are assured, SIP establishes call parameters at either end of the communication, and handles the call transfer and termination. SIP is specified in IETF's Request for Comments (RFC) 3261, which is herein included by reference in its entirety.

Nowadays, SIP has emerged as the protocol of choice for handling session setup in the IP Multimedia Subsystem (IMS).

As SIP is employed for most session setup scenarios in IMS, it has been noticed that SIP signaling protocol is characterized by large message sizes, which results in increased processing demands on the nodes (e.g. terminals and servers) involved in the SIP sessions. For example, typical SIP messages range from a few hundred bytes up to a few thousand bytes. With the planned usage of SIP protocol in wireless handsets, as part of 2.5G and 3G cellular networks, where bandwidth over-the-air is scarce and call set-up time is critical, large message size become a problem.

A partial solution to this drawback was provided by the use of SigComp (Signalling Compression). RFCs 3320 and 3321, which are also included herein in their entirety, specify a protocol on the IETF standards track that may be used to compress application layer protocols such as SIP. SigComp enables compression and decompression of messages sent across the networks, which have stringent bandwidth restrictions. SigComp may interface with the three main transport layer protocols, namely TCP, UDP and SCTP. One of the main drivers for the development of SigComp is its planned usage of text-based protocols like SIP in wireless handsets as part of 2.5G and 3G cellular networks. In such networks, the large SIP message size coupled with relatively low data rates across the radio interface results in significant transmission delays. SigComp provides a means to reduce this problem by offering robust, lossless compression of application messages. In SIP, SigComp is invoked and negotiated between the parties involved in the session (e.g. terminals and/or servers). The client may initiate the compression mechanism by requesting the use of SigComp through the inclusion of the extension header "comp=sigcomp" in the request message. SigComp implements a decompression virtual machine, which allows applications to dynamically select the compression algorithm of their choice. Thus, SigComp allows two peers to perform compression/decompression using any compression technique, provided that the decompressor is provided with the byte code needed to perform the decompression to recover the original message. This flexibility is achieved by virtue of the fact that the byte code for doing the decompression is transferred within the SigComp messages, hence allowing the originating party to practically choose any compression algorithm it sees fit, without causing any inter working problems. In that respect, the SigComp framework specifies a generic virtual decompressor machine.

Upon establishment of a session with SigComp, one node (e.g. a terminal) sends a first message along with the byte code, which is binary program; this program indicates to the receiving terminal how it can decompress the compressed message using a SIP dictionary. The IETF RFC 3485, also included herein in its entirety, specifies the standard SIP dictionary. When sending a message, the SIP message content is compared with the SIP dictionary. If a match is found between a text string of the message and the dictionary, the message as sent does not include that string, but instead comprises a start address where, in the dictionary, the receiver can find the missing text string. The length of the string is also included so that the receiver terminal can recompose the compressed message using its own dictionary.

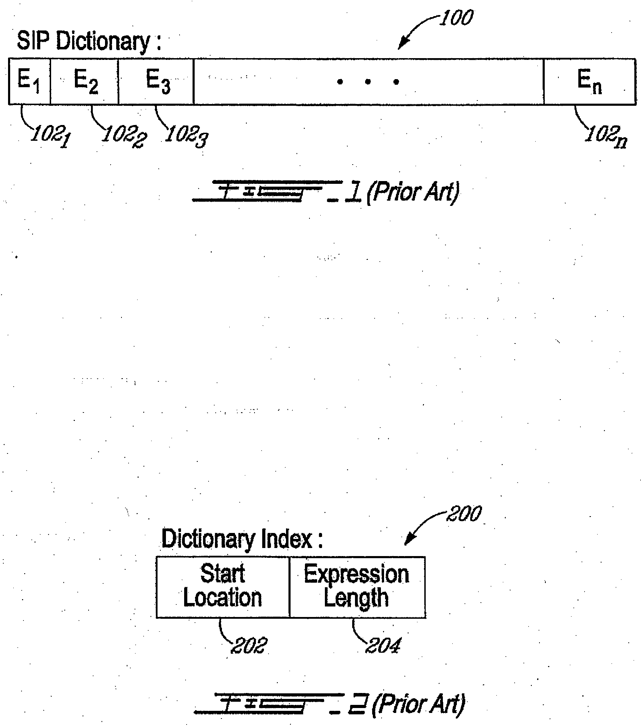

Reference is now made to Figure 1 (Prior Art), which is high level representation of a SIP dictionary 100. In such a dictionary, string (text) expressions $E_1$ - $E_n$ $102_i$ used in SIP messages are inserted. Some or all of these expressions $E_i$ $102_i$ may be complete SIP messages as well. They are used for replacing strings which are part of SIP messages, or SIP messages in their entirety, thus reducing the size of the transmitted message (Compressing the message). Typically, the size and number of expressions $E_i$ is limited by the size of the memory allocated to the dictionary.

Reference is now made to Figure 2 (Prior Art), which is a high level representation of a dictionary index 200. When an expression is detected in SIP message to be transmitted to match an expression $E_i$ of the dictionary, that expression of the SIP message is replaced within the message by the dictionary index 200 pointing to the expression within the dictionary. As the index size is much smaller than the replaced expression, the size of the transmitted message is reduced (the message is compressed). The index 200 may comprise the location 202 of the expression in the dictionary 100, and the expression length 204, thus providing sufficient information to the receiver side to retrieve the expression from its own dictionary 100 to be able to reconstruct (decompress) the original message.

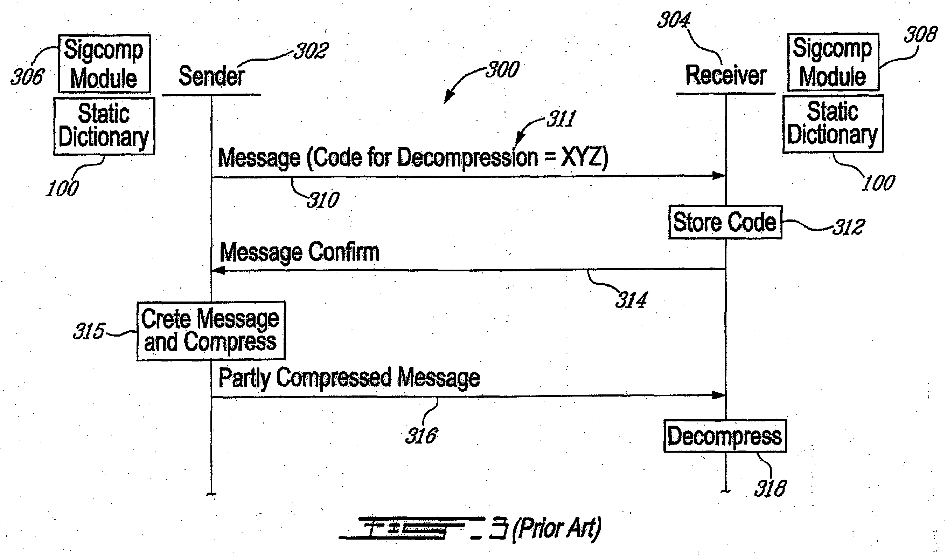

Reference is now further made to Figure 3 (Prior Art), which is a high level nodal operation and signal flow diagram of a SigComp compression/decompression scheme using a SIP static dictionary 100. Shown in Figure 3 is a sender 302 (e.g. a terminal or a server) and a receiver 304 (e.g. another terminal or server), each one having a SigComp module 306 and 308 respectively and the same static SIP dictionary 100. When the sender 302 desires to send a compressed message to the receiver 304 using SigComp, it first sends a message 310 via its SigComp module 306 that includes the byte code 311 to be used for decompression by the receiver 304, which, upon receipt of the message 310, stores the byte code, action 312, and confirms the safe receipt of message 310 via a message confirm action 314. Upon receipt of message 314, the Sender 302 implicitly deducts that the byte code 311 was successfully received by Receiver 304. Then only can the sender 302 send a compressed message, such as the compressed message 316, to the receiver 304, using its SigComp module 306. For this purpose, the sender's SigComp module 306 uses the dictionary 100 to replace any expressions of the message 316 found to match expressions from the dictionary 100 with corresponding expression indexes as described hereinbefore, action 315. The message 316 is then sent to the receiver 304 which, upon receipt of the message 316, uses its own SigComp module 308 to decompress the message, action 318, by retrieving from its own dictionary 100 the expressions that correspond to the indexes contained in the message 316, thus reconstructing the original message.

Due to the heavy signaling involved in SIP, 3GPP (the 3rd Generation Partnership Project) IMS Release 5 standards mandates SigComp (Signaling Compression) as the compression/decompression protocol of choice for IMS. SIGCOMP stacks can be used in 3G User terminals and all types of Call State Control Functions (CSCFs.)

The major components of SigComp are:

• Compressor
  is the component that compresses the messages and uploads the byte code for the corresponding decompression algorithm to the decompressor as part of the SigComp message.

• Decompressor (also called Universal Decompressor Virtual Machine, UDVM) provides a mechanism to uncompress messages by interpreting the corresponding byte code. The UDVM can be used to decompress the output of various compressors such as DEFLATE (defined in the IETF's RFC-1951).

• State Handler
  retains information between received SigComp messages and thus, eliminates the need to send decompression instructions with each of the compressed message.

SigComp is agnostic of compression algorithms, supports state handling for better compression ratio, is pluggable with any protocol stack and provides APIs for easy integration with any application.

Besides static SIP dictionary defined in the IETF RFC 3585, SigComp can also use dynamic SIP dictionaries, which instead of being pre-defined as the static SIP dictionaries, they are rather updated each time a message is successfully decompressed. In such instances, the entire SIP decompressed message is copied in the dynamic dictionary in a round-robin manner, i.e. replacing the oldest message of the dictionary. In this manner, most recent decompressed messages are kept in the dictionary to serve as a basis for subsequent compression/decompressions.

However, it has been proven though field trials that the current SigComp specifications have several shortcomings, which result into a compression ratio that is significantly less that what has been anticipated. For example, for some services such as Push-To-Talk (PTT), the latencies that resulted from the poor compression ratios achieved for message compression, compounded with the limited storage in end user devices to deal with large SIP messages, were unacceptable.

Hypothesis to explain the reasons why the current SigComp specifications are not optimal are as follows:

- Dynamic compression does not work with non-reliable transport medium. This is due to the limited storage in end user devices and the requirements on this memory (size of memory) by the SigComp specification. In many devices, it is impossible to store more than 2 SIP message simultaneously. Since SIP messages can get out of order because of UDP, decompression failure occurs, as the state against which decompression should be performed had to be released due to shortage of memory. Eliminating this problem in its entirety will be costly, both in terms of performance & efficiency. The key problem is that the dynamic compression is based on stateful compression, which does not work with non-reliable transports. As such, this is an overlook in the RFC.

- due to the limited size of the memory in end user devices, data against which compression/decompression is taking place is constantly overwritten in a round robin fashion. The overwriting was deemed useful in improving compression according to the SigComp specification. This was based on the assumption that using current traffic information to compress future message would yield a better performance. This assumption misses two (2) key facts: first, it is true only for a monolithic protocol, which is not the case for SIP. Second, in SIP, the current traffic is rarely an indication of the future traffic.

Conclusively, there is no predictability when it comes to performance, since it very much depends on the traffic type, and the performance cannot be optimized for a service such as PTT where latency to set up the session is the key performance indicator.

The international publication WO 2005/011175 bears some relation with the field of the present invention. This publication teaches a system and method for compressing and compressing SIP messages using a tokenized binary protocol. Tokens represent message elements of internal data structures defining SIP messages. Such tokens may be assigned to message elements based on various design requirements. According to this publication, various kinds of dictionaries may be used such as for example static dictionaries which are never transmitted, or dynamic message dictionaries containing strings found only in specific messages. Furthermore, local dictionaries may contain additional text strings which are specific to a particular domain, or to a particular device. However, the international publication WO 2005/011175 stops short of suggesting creation of dictionaries as the one described in the present invention.

The US patent application publication US2003/0233478 also bears some relation with the field of the present invention. This publication teaches as protocol message compression scheme for wireless communications system, wherein text messages are compressed for transmission. The method includes parsing text strings and encoding numerical values with a binary representation, analyzing the values of the text strings and populating a session specific codebook, which is initialized to empty, with partial strings from the values. This process is achieved as messages are processed for transmission, during real traffic. The method of compressing the message for transmission may also include parsing the message with a template and generating at least one substrings to be transmitted; parsing the at least one substring with entries in a session specific codebook and generating the first part of the compressed message; populating the session specific codebook with entries from unknown field values; parsing any unmatched substring with entries from a first static dictionary and generating a second part of the compressed message; parsing any still unmatched substring with entries from a second static dictionary and generating the third part; and combining the first part, the second part, and the third part of the compressed message for transmission. Nevertheless, the US patent application publication USD2003/0233478 also stops short of suggesting the creation of dictionaries as the one described in the present invention.

Patent document WO 2004/088850 discloses a method and a system in which messages exchanged between two devices can be compressed and decompressed. The compression method employs the creation of a compression state (=dictionary) at the first device, which is sent to and stored at the second device. The first device uses this state for compressing messages before transmission and the second device uses this state for decompressing the received messages.

## Summary

Accordingly, it should be readily appreciated that in order to overcome the deficiencies and shortcomings of the existing solutions, it would be advantageous to have a method and system for effectively creating a User Specific Dictionary (USD) for use with the SigComp compression algorithm. The present invention provides such a method and system.

According to the invention, there are provides a method for exchanging compression/decompression dictionaries, and a communications node comprising a client module issuing and receiving messages, a compression/decompression module for compression/decompression of messages issued and received by the client module, a first dictionary for use by the compression/decompression module, and a second dictionary for use by the compression/decompression module. When the client module determines a sequence based on which to exchange dictionaries with one or more peers (e.g. a P-CSCF), it creates the first dictionary comprising at least one prioritised type of message and sends the first dictionary to the compression/decompression module, which stores the first dictionary and further sends it to at least the peer node. Still based on said determined sequence, the client module further creates the second dictionary comprising at least one other type of message, sends the second dictionary to the compression/decompression module which stores it and further sends to a peer node.

In one aspect, the present invention is a method for exchanging dictionaries used for compression and decompression of messages, the method comprising the steps of:

a. determining a priority sequence based on which to send said dictionaries to one or more peers, the sequence involving prioritizing the sending of dictionaries with data likely to be used for message compression and decompression at the beginning of a new communication between a first communications node and the one or more peers;

b. based on said determined sequence, creating a first dictionary comprising at least one prioritised type of message that is to be compressed;

c. sending the first dictionary to a SigComp module;

d. storing the first dictionary by the SigComp module;

e. sending the first dictionary by the SigComp module to the one or more peers;

f. based on said determined sequence, creating a second dictionary comprising at least one other type of message that is to be compressed;

g. sending the second dictionary to the SigComp module;

h. storing the second dictionary by the SigComp module; and

i. sending the second dictionary by the SigComp module to the one or more peers.

In another aspect, the invention is a communications node comprising:

a client module that issues and receives messages;

a compression/decompression module for compressing and decompressing the messages issued and received by the client module;

a first dictionary for use by the compression/decompression module in compression and decompression of the messages issued and received by the client module;

a second dictionary for use by the compression/decompression module in compression and decompression the messages issued and received by the client module;

wherein the client module determines a priority sequence based on which to exchange dictionaries with one or more peers, the sequence involving prioritizing the sending of dictionaries with data likely to be used for message compression and decompression at the beginning of a new communication between the communications node and the one or more peers, and based on said determined sequence, creates the first dictionary comprising at least one prioritised type of message and sends the first dictionary to the compression/decompression module, which stores the first dictionary and further sends it to the one or more peers;

further wherein the client module, based on said determined priority sequence, creates the second dictionary comprising at least one other type of message, and sends the second dictionary to the compression/decompression module which stores it, and further sends to the one or more peers.

**Brief Description of the Drawings**

For a more detailed understanding of the invention, for further objects and advantages thereof, reference can now be made to the following description, taken in conjunction with the accompanying drawings, in which:

Figure 1 (Prior Art) is high level representation of a SIP dictionary;

Figure 2 (Prior Art) is a high level representation of a dictionary index;

Figure 3 (Prior Art) is a nodal operation and signal flow diagram of SigComp compression/decompression scheme using a Sip static dictionary;

Figure 4 is an exemplary nodal operation and signal flow diagram representative of a telecommunications network implementing a preferred embodiment of the present invention; and

Figure 5 is an exemplary high-level block diagram representative of a node implementing the preferred embodiment of the present invention.

**Detailed Description**

The innovative teachings of the present invention will be described with particular reference to various exemplary embodiments. However, it should be understood that this class of embodiments provides only a few examples of the many advantageous uses of the innovative teachings of the invention. In general, statements made in the specification of the present application do not necessarily limit any of the various claimed aspects of the present invention. Moreover, some statements may apply to some inventive features but not to others. In the drawings, like or similar elements are designated with identical reference numerals throughout the several views.

The present invention provides a method and system for creating and using a User Specific Dictionary (USD) for use with SigComp, the USD being specific to a user and/or session and/or application, thus containing strings that are likely to be used by the user. In this manner, when applying SigComp compression to a message issued by the given application during the given session, the probability of matching parts of the messages with expressions from the USD are increased, and better compression ratios are achieved.

In order to enhance the performance of SigComp, the present invention provides the USD, which allows every user to have a specific personalised dictionary that is uploaded to a peer (e.g. to a P-CSCF) and that is used by SigComp in lieu of, or in addition to, the prior art static and/or dynamic dictionary for compression/decompression purposes. It is to be noted that while the following exemplary implementation of the invention will be described with particular reference to SIP and SIP messages, the invention can be applied as well to other text-based signalling protocol.

When a client uploads a USD to be used for compression with a peer in lieu of the default SIP dictionary, dynamic compression can be used concomitantly to the use of the USD, or suspended. Empirical results demonstrated that in some circumstances, a good USD yields better compression ratios than dynamic compression, thus leading to a much better performance, when it comes to compression ratios. The compression ratio depends to a large extent on the size of the USD, and the closeness of the content of the USD against the actual SIP traffic. Some results also demonstrated that for most, if not all applications, the session setup time is of critical importance. Equally important, was the size of presence-related traffic because of its significant size and unpredictability. Compression ratios had to be excellent for these traffic cases.

As stated before, the USD is focused to optimize the performance of session start up and Presence traffic. Session set up in this case may be defined as including SIP messages needed for the session to be successfully established. The impacted SIP messages for session setup are thus the followings:

INVITE, 1XX, 2XX, ACK.

On the other hand, the impacted SIP messages for Presence are:

PUBLISH; 2XX, NOTIFY, 2XX.

The performance of the above traffic cases is measured as follows:

$$\text{Performance of session set up sequence} = \frac{\text{Uncompressed length of (INVITE + 1XX+2XX+ACK)}}{\text{Compressed length of (INVITE + 1XX+ 2XX+ACK)}}$$

where applicable during the session setup.

Performance of presence

$$=$$

Uncompressed length of (PUBLSIH + 2XX (PUBLISH) +NOTIFY + 2XX (NOTIFY)

$$/$$

Compressed length of (PUBLISH + 2XX (PUBLISH) + NOTIFY + 2XX (NOTIFY))

USD Content

Therefore, based on the above, the greater the length of the matched expressions (also called patterns) between the actual traffic and the USD, the better is the compression efficiency. Empirical results demonstrated that compression efficiency for session start-up sequence is optimized if the USD includes a complete INVITE and 2XX messages based on actual traffic for the concerned user. Similarly, empirical results demonstrated that compression efficiency for presence traffic is optimized if the USD includes a complete PUBLISH & NOTIFY SIP messages. This implies that the USD content, for optimum performance from a compression efficiency point of view, should look as follows:

USD optimized for session setup = INVITE + 2XX

USD optimized for Presence = (NOTIFY + PUBLISH + 2XX (PUBLISH) + 2XX (NOTIFY))

As a typical SIP message is composed of a static part and a dynamic part that varies from every SIP session to another, the messages used to make up the USD as per the above should be composed from simulated real traffic, or real traffic, so that they reflect the user most recent contact list, and the behaviour of the application server the terminal is communicating with. Preferably, the USD should also be created immediately after power-up of a terminal or the launch of a given application, so that maximum compression can be achieved as soon as possible, such as for example when setting-up a new communication session. The USD may also be constantly updated from real traffic, in order to marginalize some of the dynamic aspects of the SIP messages, since they are now incorporated in the USD, thus improving the performance.

Preferably, according to the invention, even though the USD is constantly updated during traffic, it is only submitted once to the SigComp module of the node (e.g. terminal or server) for transfer to the peer. Typically, this occurs every time the subscriber launches his client application, and registers for the first time. This USD may remain in effect until such time as the client closes the application and restarts it later where a new USD is sent again to the peer.

The order of data entered in the USD may reflect the priority of the data. Hence, high priority data should be placed in first in the submitted USD. This may provide an advantage to the USD as it may take actually several SIP messages to transfer the entire USD to the peer for maximum compression efficiency. Transferring high priority data first allows that data to be used as soon as it is acknowledged by the peer. Furthermore, the typically limited size of memory available for storing the USD in terminals implies that for a large USD, parts of it may not be transferred, and hence cannot be used for compression. Thus, the low priority portions of the USD should be transferred at last. The SigComp module starts using any USD that has been confirmed by a peer for compressing/decompressing subsequent messages without waiting for the entire USD to be transmitted.

When a client is being launched for the first time in a terminal or server, obviously there is no USD available to be submitted to SigComp. As such, there is a need to create the USD, which can be done using real traffic or simulated traffic. Once a USD is created, it may be regularly updated during traffic, so that once a user launches a client subsequent to the first time, the client submits the last saved USD to SigComp immediately at power-up registration. Even though it is typical for the client to submit the USD at power-up IMS registration, nothing prevents a client from submitting a USD later as long as it is included in the right message (for example, SigComp does not permit a USD to be included in some messages such as INVITE).

According to the present invention, the USD for optimizing session start-up traffic is created independently from the USD for optimising presence traffic. They can also be submitted independently to SigComp, or alternatively they can be merged in a single big USD. For compression optimization purposes, it may be important to that the order in which various USDs or USD parts are submitted is maintained. The preferred structure of USD respecting priority is as follows:

## Possible USD structure = [INVITE, 2XX, NOTIFY (complete NOTIFY), PUBLISH]

The above structure implies that INVITE has the highest priority, as it is critical to session set-up, while PUBLISH has the lowest priority. As such, in order to allow the client flexibility in USD content based on the above structure, it is recommended that the client stores locally the content depicted above in 4 separate parts as follows:

## USD_1 = INVITE

## USD_2 = NOTIFY

## USD_3 = 200 OK for INVITE

## USD_4 = PUBLISH

The rationale for that choice is that the intent of the USD is to optimize the compression efficiency not only for session setup messages, but also for presence-related messages. For some types of memory used to store the USD, one can barely fit an INVITE and a NOTIFY, which are the most critical elements needed for compression, hence USD1 and USD2 are defined first to insure they can fit into the memory. For a greater memory size, one can afford to include more messages, and then order of the messages may be of reduced relevancy. It is to be understood that while in the present exemplary implementation the above-described message order may be preferred, other orders of the messages may be contemplated and found advantageous in other implementations as well.

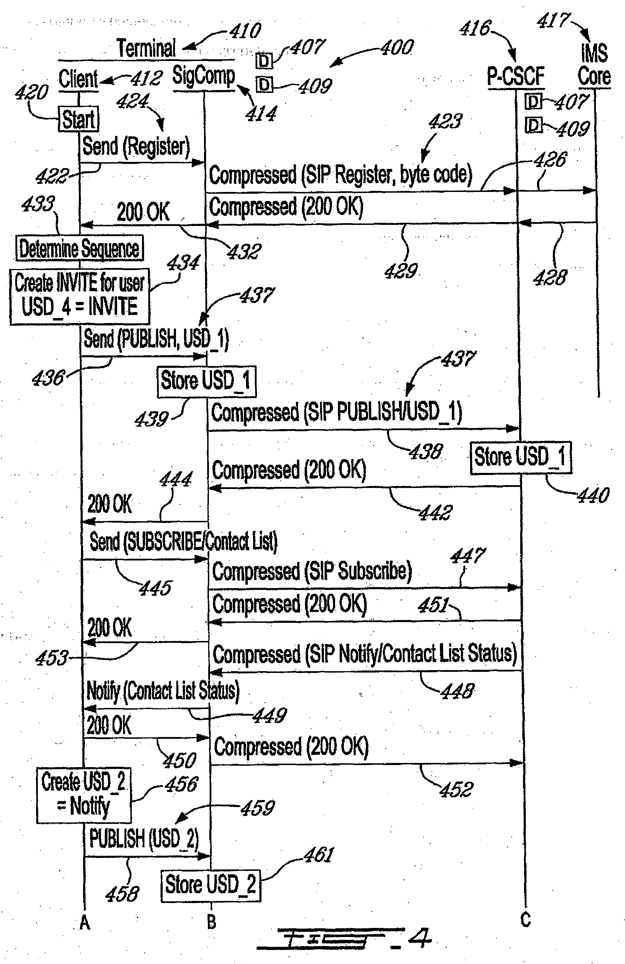

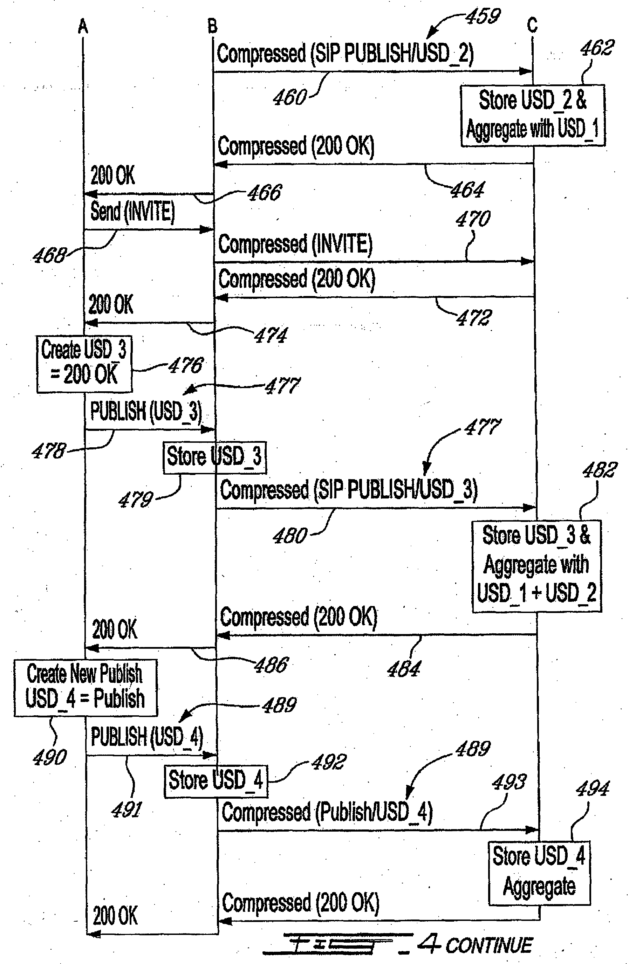

Reference is now made to Figure 4, which is an exemplary nodal operation and signal flow diagram representative of a telecommunications network 400 implementing a preferred embodiment of the present invention. Shown in Figure 4 is first, a terminal 410 which comprises a client module 412, such as for example a SIP client module capable of establishing, managing and terminating SIP communications on behalf of terminal 410, and a SigComp module 414, responsible for compression and a compression of messages on behalf of the client 412. Initially, the terminal 410 may also comprise one or more static SIP dictionaries 407 and one or more dynamic SIP dictionaries 409 for use in compression and decompression of SIP messages. The terminal 410 communicates via appropriate communication interfaces and links with a Proxy Call State Control Function (P-CSCF) 416 responsible of providing network access and service support for the terminal 410. The P-CSCF 416 may also comprises one or more static SIP dictionaries 407 and one or more dynamic SIP dictionaries 409, which are to be used for compression and decompression of messages exchanged with terminal 410. Finally, the P-CSCF 416 is connected to the IP Multimedia Subsystem (IMS) core network 417, which connects to the Internet, and/or other networks.

In Figure 4, first, in action 420, the client module 412 is launched on the terminal 410. Such action may comprise the power-on of the terminal 410, the start of the client application 412, or alternatively any other triggering of the creation of the USD. The client module 412 issues a SIP REGISTER message 424, action 422, sent to the SigComp module 414, which acts to compress the message using, for example, the static SIP dictionary, if any is present, as it is known in the art, and sends the compressed SIP REGISTER message to the P-CSCF 416 along with the byte code 423 (which is only sent if this was the first message sent from the SigComp module 414 to the P-CSCF 416 in the session), action 426. The later decompresses the message 426 using the byte code 423 and the appropriate one of the dictionaries 407 and 409 (action not shown) and relays the message 426 to the IMS core network 417, where the message is authorized and authenticated as known in the art. Upon successful registration of the terminal, the IMS core network 417 responds back to the P-CSCF 416 with a 200 OK message 428, which is received and compressed by the P-CSCF 416 using the same dictionary as before. The compressed message 429 is decompressed by the SigComp module 414 and the 200 OK message is relayed in action 432 to the client 412, thus confirming to the client 412 the successful registration with the P-CSCF 416.

At this point, the client module 412 determines the proper sequence (order) in which the various USDs are to be created and sent to the peer P-CSCF 416 to be used for compression and decompression of messages, action 433. Part of action 433 may be riot only determination of the sequence, but also of the number of USDs that are to be created. The client 412 should then act to create messages that are to be included in the determined and yet to be populated USDs. For that purpose, the client 412 creates SIP messages in a prioritized order defined for the USDs, i.e. INVITE message first, followed by a NOTIFY message, followed by a 200 OK message for INVITE, followed by a PUBLISH message. It is to be noted that while the above defined order has been deemed preferred in the exemplary scenario described by the present invention, other orders may be beneficial as well in the context of other applications.

Based on this priority, the client 412 first acts in action 434 by creating a SIP INVITE message for a user from his contact list, and uses that INVITE message to create the first part of the USD, i.e. USD_1. As the SIP INVITE message is created by the client module 412, the message contains all the parameters specific to this user, and from this perspective, the USD_1 437 is a user specific dictionary. It contains strings which are specific to the user, which augments the probabilities that these strings would be also found in subsequent SIP INVITE messages issued by the user, and used for dictionary-based compression, thus improving the compression efficiency. In action 436, the client module 412 sends a SIP PUBLISH message containing USD_1 437 to the SigComp module 414, which acts to store the USD_1437, action 439, to compress the message and to send it further to the P-CSCF 416, action 438. Upon receipt of the USD_1 437, the P-CSCF 416 decompresses it and stores it locally, action 440. The P-CSCF 416 then responds back with a 200 OK message, action 442 and respectively action 444 in order to confirm safe receipt of the USD_1 437. At this point, the SigComp module 414, having stored the USD_1 437 and the same USD_1 437 being also saved by the P-CSCF 416, SIP messages of any subsequent communications between the client module 412 and the P-CSCF 416 can be compressed using USD_1 437, in case the terminal 410 issues any subsequent SIP INVITE message.

Next, the client module 412, issues a SIP SUBSCRIBE message in action 445 in order to obtain presence status of contacts from its own contact list. The message reaches the SigComp module 414, were it is compressed, and relayed in action 447 to the P-CSCF 416. Confirmation of receipt of message 447 by the P-CSCF 416 is performed using 200 OK messages 451 and 453. The later responds back with a compressed SIP NOTIFY message that contains the requested contact list status, action 448. The SIP NOTIFY message is decompressed upon receipt by the SigComp module 414, and relayed to the client module 412, action 449. The safe receipt of the message is confirmed by the client module 412 using 200 OK message of actions 450 and 452 respectively. The client module 412 being now provided with the NOTIFY message of action 449, uses that message in action 456 to create the USD_2 which content is the SIP NOTIFY message of action 449. As the SIP NOTIFY message is destined to the client module 412, it contains the parameters specific to this user, and from this perspective, the USD_2 459 is a user specific dictionary. It contains strings which are specific to the user, which augments the probabilities that these strings would be also found in subsequent SIP NOTIFY messages destined to the user, and used for dictionary-based compression, thus improving the compression efficiency. In action 458, the client module 412 issues a SIP PUBLISH message containing the USD_2 459, which is stored, action 461, and compressed by the SigComp module 414, and further relayed in action 460 to the P-CSCF 416. Upon receipt of the message, the P-CSCF 416 decompresses the message, stores the USD_2 459, action 462. This action may also comprise the concatenating of the USD_2 459 with the USD_1 440, previously received in action 438. Then, the P-CSCF 416 confirms safe receipt of the message in action 460 with 200 OK messages 464 and 466 respectively. At this point, the SigComp module 414, having stored the USD_2 459 and the same USD_2 459 being also saved by the P-CSCF 416, SIP messages of any subsequent communications between the client module 412 and the P-CSCF 416 can be compressed using USD_2 459, in case the P-CSCF 416 issues any subsequent SIP NOTIFY message.

In order to create the next part of the USD, i.e. USD_3 which should contain a 200 OK message for INVITE, the client module 412 issues a SIP INVITE message in action 468 to one of its contacts from its contact list. Unlike the SIP INVITE message of action 434 which was simulated and not sent, this SIP INVITE message is part of real traffic, as its purpose is to reach the contact's terminal and trigger a 200 OK response for use by the terminal 410 as it will be described herein. The SIP INVITE message reaches the SigComp module 414 where it is compressed (e.g. using the static SIP dictionary if any) and further sent in action 470 to the P-CSCF 416 which further relays it toward the contact terminal (action not shown). When the P-CSCF 416 receives from the contact's terminal a 200 OK message in return (action not shown), it replies back with the compressed version of the 200 OK message in action 472, which is intercepted and decompressed by the SigComp module 414, and further relayed to the client module 412, action 474. Being now provided with a real 200 OK message for INVITE, the client module 412 creates USD_3 which content includes the 200 OK message received in action 474, action 476. As the SIP 200 OK message is destined to the client module 412, it contains the parameters specific to this user, and from this perspective, the USD_1 437 is a user specific dictionary. It contains strings which are specific to the user, which augments the probabilities that these strings would also be found in subsequent SIP 200 OK messages received by the user, and used for dictionary-based compression, thus improving the compression efficiency. Further in action 478, the client module 412 sends the created USD_3 477 using a SIP PUBLISH message, which is stored by the SigComp module 414 action 479, and further compressed and sent in action 480 to the P-CSCF 416. The later decompresses the message and stores the USD_3 477, action 482. This action may also comprise the concatenating of the USD_3 477 with the USD_1 440 and USD_2 459, previously received in actions 438 and 460 respectively. Then, the P-CSCF 416 confirms safe receipt of the message 480 using 200 OK messages 484 and 486. At this point, the SigComp module 414, having stored the USD_3 477 and the same USD_3 477 being also saved by the P-CSCF 416, SIP messages of any subsequent communications between the client module 412 and the P-CSCF 416 can be compressed using USD_3 477, in case the terminal 410 receives any subsequent SIP 200 OK message.

Finally, the client module 412 creates a SIP PUBLISH message in action 490, and uses that message to create the USD_4 which content is the SIP PUBLISH message. As the SIP PUBLISH message is created by the client module 412, the message contains the parameters specific to this user, and from this perspective, the USD_4 489 is a user specific dictionary. It contains strings which are specific to the user, which augments the probabilities that these strings would be also found in subsequent SIP PUBLISH messages issued by the user, and can thus be used for dictionary-based compression, and as a result improving the compression efficiency. In action 491, the client module 412 issues a SIP PUBLISH message for the SigComp module 414 containing the USD_4 489, which is stored, action 492, and compressed by the SigComp module 414 (using any one of the dictionaries 407 and 409), and further relayed in action 493 to the P-CSCF 416. Upon receipt of the message, the P-CSCF 416 decompresses the message, stores the USD_4 489, action 494, and confirms safe receipt of the message with 200 OK messages 495 and 496 respectively. Action 494 may also comprise the concatenating of the USD_4 489 with the USD_1 440, USD_2 459, and USD_3 477, previously received in actions 438,460, and 480 respectively.

At this point, all four USDs are exchanged successfully between the client module 412 and the peer P-CSCF 416, so that all of them can be used for any subsequent compression of a corresponding message:

USD_1 = INVITE

USD_2 = NOTIFY

USD_3 = 200 OK for INVITE

USD_4 = PUBLISH

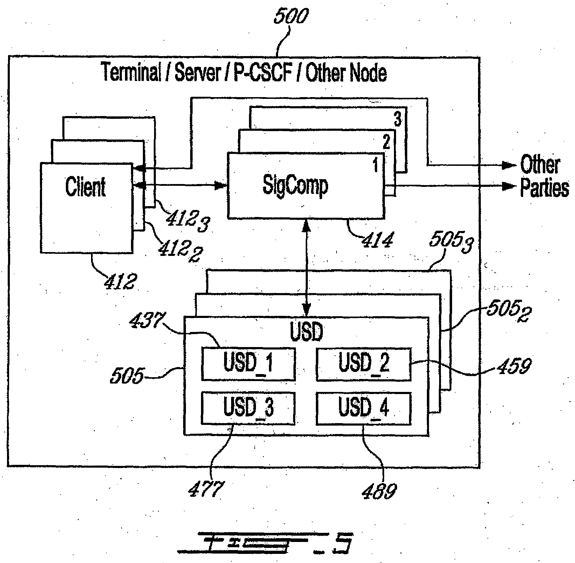

Reference is now made to Figure 5, which is an exemplary high-level block diagram representative of a node 500 implementing the preferred embodiment of the present invention. The node 500 may comprise a terminal 410 as the one described hereinbefore with relation to Figure 4, a server, a P-CSCF (or any other type of CSCF), or any other type of node that may communicate using SigComp, in a manner similar or analogous to the one described in relation to Figure 4. The node 500 comprises a client 412 such as the one previously described and which is responsible for establishing communication with other parties, such as for example with other terminals, servers, or CSCFs. The node 500 further comprises a SigComp module 414 which is responsible for the compression and decompression of messages issued by and destined to the client 412. Finally, the node 500 comprises a USD 505, which may be composed of a various USD parts, such as for example USD_1 437, USDs_2, 459, USD_3 477 and USD_4 489. The node 500 functions as described in relation to Figure 4, previously described. For example, the node 500 may represent the terminal 410, and the client 412 may act as described in Figure 4 in order to create messages that are to populate the various parts of the USD, which are to be used by the SigComp module 414 for compression and decompression purposes. Such USD parts are also sent by the node 500 two other parties with which the node 500 intends to communicate using SigComp.

In a variant of the preferred embodiment of the invention, also illustrated in Figure 5, the node 500 may run multiple applications (clients) $412_i$, such as for example a Voice over IP application $412_1$, a PTT application $412_2$, and a file transfer application $412_3$. In such a configuration, each one of the application clients $412_i$ has a corresponding USD $505_i$, which may or may not be composed of multiple USD parts, wherein each one of the USD comprises expressions used by its corresponding client application $412_i$. One or more SigComp modules 414 may perform the compression and decompression related actions on behalf of the application clients, using the USD that corresponds to each one of the application clients. In a first possible implementation, only one SigComp module 414 is present and performs the compression and decompression related actions on behalf of all application clients $412_i$., In a second possible implementation, there is one SigComp module 414i for each application client $412_i$.

Therefore, with the present invention it becomes possible to provide peer nodes, such as for example the terminal and the P-CSCF with USDs so that better compression is achieved. Furthermore, the USDs are exchanged between the peers as soon as they are created, preferably after initial terminal registration, so that they can be used as soon as they are needed.

Based upon the foregoing, it should now be apparent to those of ordinary skills in the art that the present invention provides an advantageous solution for dictionary-based compression and decompression. Although the system and method of the present invention have been described in particular reference to SIP, those skilled in the art would readily appreciate that the present invention can be used with any type of text-based signaling protocol. It should be realized upon reference hereto that the innovative teachings contained herein are not necessarily limited thereto and may be implemented advantageously with any applicable protocol, such as for example the Session Description Protocol (SDP). It is believed that the operation and construction of the present invention will be apparent from the foregoing description. While the method and system shown and described have been characterized as being preferred, it will be readily apparent that various changes and modifications could be made therein without departing from the scope of the invention as defined by the claims set forth hereinbelow.

Although several preferred embodiments of the method and system of the present invention have been illustrated in the accompanying Drawings and described in the foregoing Detailed Description, it will be understood that the invention is not limited to the embodiments disclosed, but is capable of numerous rearrangements, modifications and substitutions, but within the scope of the invention as set forth and defined by the following claims.

**Claims**

1. A method for exchanging dictionaries used for compression and decompression of messages, the method comprising the steps of:

   a. determining a priority sequence based on which to send said dictionaries to one or more peers, the sequence involving prioritizing the sending of dictionaries with data likely to be used for message compression and decompression at the beginning of a new communication between a communications node and the one or more peers;
   b. based on said determined sequence, creating a first dictionary comprising at leat one prioritised type of message that is to be compressed;
   c. sending the first dictionary to a SigComp module;
   d. storing the first dictionary by the SigComp module;
   e. sending the first dictionary by the SigComp module to the one or more peers;
   f. based on said determined sequence, creating a second dictionary comprising at least one other type of message that is to be compressed;
   g. sending the second dictionary to the SigComp module;
   h. storing the second dictionary by the SigComp module; and
   i. sending the second dictionary by the SigComp module to the one or more peers.

2. The method claimed in claim 1, wherein the first and second dictionaries are Session Initiation Protocol (SIP) dictionaries, and the at least one prioritised type of message comprises a SIP INVITE message.

3. The method claimed in claim 1, wherein the first and second dictionaries are Session Initiation Protocol (SIP) dictionaries, and the at least one other type of message comprises a SIP NOTIFY message.

4. The method claimed in claim 1, wherein step b. comprises the steps of:

   b.1. creating a message of the prioritized type; and
   b.2. including the message of the prioritized type in the first dictionary.

5. The method claimed in claim 1, wherein step f. comprises the steps of:

   f.1. creating a message of the other type; and
   f.2. including the message of the other type in the second dictionary.

6. The method claimed in claim 1, wherein steps a. through i. are performed responsive to the step of:

   j. launching an application client module on the communications node.

7. The method claimed in claim 1, wherein steps a. through i. are performed responsive to the step of:

   j. registering the communications node with a communications network.

8. The method claimed in claim 1, wherein the prioritised type of message is a message created by a client module of the communications node, the first dictionary being specific to the terminal.

9. The method claimed in claim 1, wherein the other type of message is a message created by a client module of the communications node, the second dictionary being specific to the terminal.

10. A communications node comprising:

    a client module that issues and receives messages;
    a compression/decompression module for compressing and decompressing the messages issued and received by the client module;
    a first dictionary for use by the compression/decompression module in compression and decompression of the messages issued and received by the client module;
    a second dictionary for use by the compression/decompression module in compression and decompression the messages issued and received by the client module;
    wherein the client module is adapted to determine a priority sequence based on which to exchange dictionaries with one or more peers, the sequence involving prioritizing the sending of dictionaries with data likely to be used for message compression and decompression at the beginning of a new communication between the communications node and the one or more peers, and based on said determined sequence, create the first dictionary comprising at least one prioritised type of message and send the first dictionary to the compression/decompression module, which stores the first dictionary and further send it to the one or more peers;
    further wherein the client module, based on said determined priority sequence, is adapted to create the second dictionary comprising at least one other type of message, and send the second dictionary to the compression/decompression module which stores it, and further send it to the one or more peers.

11. The communications node claimed in claim 10, wherein the first and second dictionaries are Session Initiation Protocol (SIP) dictionaries, and the at least one prioritised type of message comprises a SIP INVITE message.

12. The communications node claimed in claim 10, wherein the first and second dictionaries are Session Initiation Protocol (SIP) dictionaries, and the at least one other type of message comprises a SIP NOTIFY message.

13. The communications node claimed in claim 10, wherein for creating the first dictionary, the client module is adapted to create a message of the prioritized type, and include the message of the prioritized type in the first dictionary.

14. The communications node claimed in claim 10, wherein for creating the second dictionary, the client module is adapted to create a message of the other type, and include the message of the other type in the second dictionary.

15. The communications node claimed in claim 10, wherein the client module is first launched on a communications node.

16. The communications node claimed in claim 10, wherein the communications node is adapted to first register with a communications network.

17. The method claimed in claim 10, wherein the prioritised type of message is a message created by the client module, the first dictionary being specific to the communications node.

18. The method claimed in claim 10, wherein the other type of message is a message created by the client module, the second dictionary being specific to the communications node.

**Patentansprüche**

1. Verfahren zum Austauschen von Wörterbüchern, die zur Komprimierung und Dekomprimierung von Nachrichten verendet werden, wobei das Verfahren die folgenden Schritte umfasst:

   a. Bestimmen einer Prioritätsfolge, auf deren Basis die Wörterbücher an einen oder mehrere Partner gesendet werden, wobei die Folge ein Priorisieren des Sendens von Wörterbüchern mit Daten umfasst, die wahrscheinlich zur Komprimierung und Dekomprimierung von Nachrichten am Anfang einer neuen Kommunikation zwischen einem Kommunikationsknoten und dem einen oder den mehreren Partnern verwendet werden;
   b. Erstellen basierend auf der bestimmten Folge eines ersten Wörterbuchs, das mindestens einen priorisierten Nachrichtentyp umfasst, der komprimiert werden soll;
   c. Senden des ersten Wörterbuchs an ein SigComp-Modul;
   d. Speichern des ersten Wörterbuchs durch das SigComp-Modul;
   e. Senden des ersten Wörterbuchs durch das SigComp-Modul an den einen oder die mehreren Partner;
   f. Erstellen basierend auf der bestimmten Folge eines zweiten Wörterbuchs, das mindestens einen anderen Nachrichtentyp umfasst, der komprimiert werden soll;
   g. Senden des zweiten Wörterbuchs an das SigComp-Modul;
   h. Speichern des zweiten Wörterbuchs durch das SigComp-Modul;
   i. Senden des zweiten Wörterbuchs durch das SigComp-Modul an den einen oder die mehreren Partner.

2. Verfahren nach Anspruch 1, wobei die ersten und zweiten Wörterbücher Sitzungseinleitungsprotokoll (SIP)-Wörterbücher sind, und der mindestens eine priorisierte Nachrichtentyp eine SIP INVITE-Nachricht umfasst.

3. Verfahren nach Anspruch 1, wobei die ersten und zweiten Wörterbücher Sitzungseinleitungsprotokoll (SIP)-Wörterbücher sind, und der mindestens eine andere Nachrichtentyp eine SIP NOTIFY-Nachricht umfasst.

4. Verfahren nach Anspruch 1, wobei Schritt b. die folgenden Schritte umfasst:

   b.1. Erstellen einer Nachricht des priorisierten Typs; und
   b.2. Aufnehmen der Nachricht des priorisierten Typs in das erste Wörterbuch.

5. Verfahren nach Anspruch 1, wobei Schritt f. die folgenden Schritte umfasst:

   f.1. Erstellen einer Nachricht des anderen Typs; und
   f.2. Aufnehmen der Nachricht des anderen Typs in das zweite Wörterbuch.

6. Verfahren nach Anspruch 1, wobei Schritt a. bis i. in Reaktion auf den folgenden Schritt ausgeführt werden:

   j. Starten eines Anwendungsclientmoduls auf dem Kommunikationsknoten.

7. Verfahren nach Anspruch 1, wobei Schritt a. bis i. in Reaktion auf den folgenden Schritt ausgeführt werden:

   j. Anmelden des Kommunikationsknotens bei einem Kommunikationsnetz.

8. Verfahren nach Anspruch 1, wobei der priorisierte Nachrichtentyp eine Nachricht ist, die von einem Clientmodul des Kommunikationsknotens erstellt wird, wobei das erste Wörterbuch spezifisch für das Endgerät ist.

9. Verfahren nach Anspruch 1, wobei der andere Nachrichtentyp eine Nachricht ist, die von einem Clientmodul des Kommunikationsknotens erstellt wird, wobei das zweite Wörterbuch spezifisch für das Endgerät ist.

10. Kommunikationsknoten, umfassend:

   ein Clientmodul, das Nachrichten ausgibt und empfängt;
   ein Komprimierungs-/Dekomprimierungsmodul zum Komprimieren und Dekomprimieren der Nachrichten, die vom Clientmodul ausgegeben und empfangen werden;
   ein erstes Wörterbuch zur Verwendung durch das Komprimierungs-/Dekomprimierungsmodul bei der Komprimierung und Dekomprimierung der Nachrichten, die vom Clientmodul ausgegeben und empfangen werden;
   ein zweites Wörterbuch zur Verwendung durch das Komprimierungs-/Dekomprimierungsmodul bei der Komprimierung und Dekomprimierung der Nachrichten, die vom Clientmodul ausgegeben und empfangen werden; wobei das Clientmodul so ausgelegt ist, dass es eine Prioritätsfolge bestimmt, auf deren Basis die Wörterbücher an einen oder mehrere Partner gesendet werden, wobei die Folge ein Priorisieren des Sendens von Wörterbüchern mit Daten umfasst, die wahrscheinlich zur Komprimierung und Dekomprimierung von Nachrichten am Anfang einer neuen Kommunikation zwischen einem Kommunikationsknoten und dem einen oder den mehreren Partnern verwendet werden, und basierend auf der bestimmten Folge das erste Wörterbuch erstellt, das mindestens einen priorisierten Nachrichtentyp umfasst, und das erste Wörterbuch an das Komprimierungs-/Dekomprimierungsmodul sendet, welches das erste Wörterbuch speichert und es an den einen oder die mehreren Partner weitersendet;

wobei das Clientmodul ferner so ausgelegt ist, dass es basierend auf der bestimmten Folge das zweite Wörterbuch erstellt, das mindestens einen anderen Nachrichtentyp umfasst, und das zweite Wörterbuch an das Komprimierungs-/Dekomprimierungsmodul sendet, welches es speichert und es an den einen oder die mehreren Partner weitersendet.

11. Kommunikationsknoten nach Anspruch 10, wobei die ersten und zweiten Wörterbücher Sitzungseinleitungsprotokoll (SIP)-Wörterbücher sind, und der mindestens eine priorisierte Nachrichtentyp eine SIP INVITE-Nachricht umfasst.

12. Kommunikationsknoten nach Anspruch 10, wobei die ersten und zweiten Wörterbücher Sitzungseinleitungsprotokoll (SIP)-Wörterbücher sind, und der mindestens eine priorisierte Nachrichtentyp eine SIP NOTIFY-Nachricht umfasst.

13. Kommunikationsknoten nach Anspruch 10, wobei das Clientmodul so ausgelegt ist, dass es zum Erstellen des ersten Wörterbuchs eine Nachricht des priorisierten Typs erstellt, und die Nachricht des priorisierten Typs in das erste Wörterbuch aufnimmt.

14. Kommunikationsknoten nach Anspruch 10, wobei das Clientmodul so ausgelegt ist, dass es zum Erstellen des zweiten Wörterbuchs eine Nachricht des anderen Typs erstellt, und die Nachricht des anderen Typs in das erste Wörterbuch aufnimmt.

15. Kommunikationsknoten nach Anspruch 10, wobei das Clientmodul zuerst auf einem Kommunikationsknoten gestartet wird.

16. Kommunikationsknoten nach Anspruch 10, wobei der Kommunikationsknoten so ausgelegt ist, dass er sich bei einem Kommunikationsnetz anmeldet.

17. Verfahren nach Anspruch 10, wobei der priorisierte Nachrichtentyp eine Nachricht ist, die vom Clientmodul erstellt wird, wobei das erste Wörterbuch spezifisch für den Kommunikationsknoten ist.

18. Verfahren nach Anspruch 10, wobei der andere Nachrichtentyp eine Nachricht ist, die vom Clientmodul erstellt wird, wobei das zweite Wörterbuch spezifisch für den Kommunikationsknoten ist.

**Revendications**

1. Procédé d'échange de dictionnaires utilisés à des fins de compression et de décompression de messages, le procédé comprenant les étapes de :

   a. la détermination d'une séquence de priorité sur la base de laquelle envoyer lesdits dictionnaires à un ou plusieurs pairs, la séquence impliquant la priorisation de l'envoi de dictionnaires avec des données susceptibles d'être utilisées à des fins de compression et de décompression de messages au début d'une nouvelle communication entre un noeud de communication et l'un ou plusieurs pairs ;
   b. sur la base de ladite séquence déterminée, la création d'un premier dictionnaire comprenant au moins un type priorisé de message qui doit être compressé ;
   c. l'envoi du premier dictionnaire à un module SigComp ;
   d. la mémorisation du premier dictionnaire par le module SigComp ;
   e. l'envoi du premier dictionnaire par le module SigComp à l'un ou plusieurs pairs ;
   f. sur la base de ladite séquence déterminée, la création d'un deuxième dictionnaire comprenant au moins un autre type de message qui doit être compressé ;
   g. l'envoi du deuxième dictionnaire au module SigComp ;

h. la mémorisation du deuxième dictionnaire par le module SigComp ; et
i. l'envoi du deuxième dictionnaire par le module SigComp à l'un ou plusieurs pairs.

**2.** Procédé selon la revendication 1, dans lequel les premier et deuxième dictionnaires sont des dictionnaires de protocole d'ouverture de session (SIP), et l'au moins un type priorisé de message comprend un message SIP INVITE.

**3.** Procédé selon la revendication 1, dans lequel les premier et deuxième dictionnaires sont des dictionnaires de protocole d'ouverture de session (SIP), et l'au moins un autre type de message comprend un message SIP NOTIFY.

**4.** Procédé selon la revendication 1, dans lequel l'étape b. comprend les étapes de :

b.1. la création d'un message du type priorisé ; et
b.2. l'inclusion du message du type priorisé dans le premier dictionnaire.

**5.** Procédé selon la revendication 1, dans lequel l'étape f. comprend les étapes de :

f.1. création d'un message de l'autre type ; et
f.2. inclusion du message de l'autre type dans le deuxième dictionnaire.

**6.** Procédé selon la revendication 1, dans lequel les étapes a. à i. sont effectuées en réponse à l'étape de :

j. lancement d'un module client d'application sur le noeud de communication.

**7.** Procédé selon la revendication 1, dans lequel les étapes a. à i. sont effectuées en réponse à l'étape d' :

j. enregistrement du noeud de communication auprès d'un réseau de communication.

**8.** Procédé selon la revendication 1, dans lequel le type priorisé de message est un message créé par un module client du noeud de communication, le premier dictionnaire étant spécifique au terminal.

**9.** Procédé selon la revendication 1, dans lequel l'autre type de message est un message créé par un module client du noeud de communication, le deuxième dictionnaire étant spécifique au terminal.

**10.** Noeud de communication comprenant :

un module client qui émet et reçoit des messages ;
un module de compression/décompression destiné à compresser et décompresser les messages émis et reçus par le module client ;
un premier dictionnaire destiné à être utilisé par le module de compression/décompression dans la compression et la décompression des messages émis et reçus par le module client ;
un deuxième dictionnaire destiné à être utilisé par le module de compression/décompression dans la compression et la décompression des messages émis et reçus par le module client ;
dans lequel le module client est adapté pour effectuer la détermination d'une séquence de priorité sur la base de laquelle échanger des dictionnaires avec un ou plusieurs pairs, la séquence impliquant la priorisation de l'envoi de dictionnaires avec des données susceptibles d'être utilisées à des fins de compression et de décompression de messages au début d'une nouvelle communication entre le noeud de communication et l'un ou plusieurs pairs, et sur, la base de ladite séquence, la création du premier dictionnaire comprenant au moins un type priorisé de message et l'envoi du premier dictionnaire au module de compression/décompression, qui mémorise le premier dictionnaire et l'envoie en outre à l'un ou plusieurs pairs ;
dans lequel le module client, sur la base de ladite séquence de priorité déterminée, est en outre adapté pour effectuer la création du deuxième dictionnaire comprenant au moins un autre type de message, et l'envoi du deuxième dictionnaire au module de compression/décompression qui le mémorise et l'envoie en outre à l'un ou plusieurs pairs.

**11.** Noeud de communication selon la revendication 10, dans lequel les premier et deuxième dictionnaires sont des dictionnaires de protocole d'ouverture de session (SIP), et l'au moins un type priorisé de message comprend un message SIP INVITE.

**12.** Noeud de communication selon la revendication 10, dans lequel les premier et deuxième dictionnaires sont des dictionnaires de protocole d'ouverture de session (SIP), et l'au moins un autre type de message comprend un message SIP NOTIFY.

**13.** Noeud de communication selon la revendication 10, dans lequel, pour la création du premier dictionnaire, le module client est adapté pour effectuer la création d'un message du type priorisé et l'inclusion du message du type priorisé dans le premier dictionnaire.

**14.** Noeud de communication selon la revendication 10, dans lequel, pour la création du deuxième dictionnaire, le module client est adapté pour effectuer la création d'un message de l'autre type et l'inclusion du message de l'autre type dans le deuxième dictionnaire.

**15.** Noeud de communication selon la revendication 10, dans lequel le module client est lancé en premier sur un noeud de communication.

**16.** Noeud de communication selon la revendication 10, dans lequel le noeud de communication est adapté pour s'enregistrer en premier auprès d'un réseau de communication.

**17.** Noeud de communication selon la revendication 10, dans lequel le type priorisé de message est un message créé par le module client, le premier dictionnaire étant spécifique au noeud de communication.

**18.** Noeud de communication selon la revendication 10, dans lequel l'autre type de message est un message créé par le module client, le deuxième dictionnaire étant spécifique au noeud de communication.

SIP Dictionary :

| $E_1$ | $E_2$ | $E_3$ | $\cdots$ | $E_n$ |
|---|---|---|---|---|

$102_1$  $102_2$  $102_3$  $102_n$

FIG. 1 (Prior Art)

Dictionary Index :

| Start Location | Expression Length |
|---|---|

202  204

FIG. 2 (Prior Art)

Sigcomp Module

*306*

Static Dictionary

*100*

Sender

*302*

*300*

*311*

Message (Code for Decompression = XYZ)

*310*

Message Confirm

*315* Crete Message and Compress

Partly Compressed Message

*316*

*304*

Receiver

Sigcomp Module

*308*

Static Dictionary

*100*

Store Code

*312*

*314*

Decompress

*318*

FIG. 3 *(Prior Art)*

Terminal *410*

Client *412*  SigComp

*420*  *424*

*407*  *400*

*416*  *417*

IMS Core

P-CSCF

Start

Send (Register)

*422*

Compressed (SIP Register, byte code) *423*

*426*

*433*

200 OK

Compressed (200 OK)

Determine Sequence

*432*

*429*

*428*

Create INVITE for user
USD_4 = INVITE

*434*

*437*

Send (PUBLISH, USD_1)

*436*

Store USD_1

*437*

*439*

Compressed (SIP PUBLISH/USD_1)

*438*

Store USD_1

Compressed (200 OK)

*444*

*442*

*440*

200 OK

Send (SUBSCRIBE/Contact List)

Compressed (SIP Subscribe) *447*

*445*

Compressed (200 OK)  *451*

200 OK

Compressed (SIP Notify/Contact List Status)

*453*

*448*

Notify (Contact List Status)

*449*

200 OK

Compressed (200 OK)

*450*

*452*

Create USD_2
= Notify

*456*

*459*

PUBLISH (USD_2)

*461*

*458*

Store USD_2

A            B                          C

FIG. 4

A          B                                    459                    C

Compressed (SIP PUBLISH/USD_2)                                    462

                              460

                                                    Store USD_2 &
                                                    Aggregate with USD_1

Compressed (200 OK)

200 OK

            466                            464
                                                    470
Send (INVITE)

468                   Compressed (INVITE)

                      Compressed (200 OK)

200 OK

                                                472
                            474

Create USD_3          476
= 200 OK
                            477
PUBLISH (USD_3)

478                                                           477
            Store USD_3

                      Compressed (SIP PUBLISH/USD_3)                482
            479

                    480                            Store USD_3 &
                                                    Aggregate with
                                                    USD_1 + USD_2

                      Compressed (200 OK)

200 OK

Create New Publish        486            484
USD_4 = Publish
                            489
490
            PUBLISH (USD_4)

491                               492
                      Store USD_4

                                          489
                                                              493            494
                      Compressed (Publish/USD_4)
                                                    Store USD_4
                                                    Aggregate

                      Compressed (200 OK)

200 OK

                        _FIG_ _4 CONTINUE

Terminal / Server / P-CSCF / Other Node

500

3
2
1

Client

SigComp

Other
Parties

412₃

412₂

412

414

505₃

437

505₂

USD

USD_1    USD_2

459

505

USD_3    USD_4

477    489

FIG. 5

**EP 2 044 750 B1**

**Patent documents cited in the description**

- WO 2005011175 A
- US 20030233478 A
- US D20030233478 S
- WO 2004088850 A